# DEMANDE DE BREVET EUROPEEN

(11) **EP 4 684 705 A1**
(43) Date de publication de la demande: **28.01.2026**
(21) Numéro de dépôt: 25186638.0
(22) Date de dépôt: 01.07.2025
(51) Int. Cl.: A47J 37/06

(54) **APPAREIL DE CUISSON ELECTRIQUE A AIR CHAUD COMPRENANT UN RECIPIENT DE CUISSON EQUIPE DE PAROIS TRANSPARENTES**

(30) Priorité: 22.07.2024 FR 2408053
(71) Demandeur: SEB S.A., 69130 Ecully (FR)
(72) Inventeur: FRADET, Gautier, 69134 Ecully Cedex (FR); PETITALLOT, Johann, 69134 Ecully Cedex (FR); PRIETO, Guillaume, 69134 Ecully Cedex (FR); SEURAT, Frédéric, 69134 Ecully Cedex (FR)
(74) Mandataire: SEB Développement

(57) **Abrégé**

L'invention concerne un appareil de cuisson électrique (1) configuré pour réaliser une cuisson d'aliments, et comprenant un boîtier (2) comprenant un logement de réception, un récipient de cuisson (3) et un système de chauffage à air chaud (10) configuré pour chauffer et cuire les aliments présents à l'intérieur de la chambre de cuisson (5) selon au moins un mode de cuisson à air chaud. Le récipient de cuisson (3) comprend une cuve de cuisson (4) configurée pour délimiter une chambre de cuisson (5) avec le boîtier (2), une façade avant (6), une première paroi transparente (7.1) montée sur la cuve de cuisson (4), une deuxième paroi transparente (7.2) montée sur la façade avant (6) et un conduit de circulation d'air (9). Le récipient de cuisson (3) comporte un élément d'étanchéité (11) configuré pour empêcher une communication fluidique entre la chambre de cuisson (5) et le conduit de circulation d'air (9) lorsque le récipient de cuisson (3) est dans une position d'insertion.

## Description

### Domaine technique

La présente invention concerne de manière générale un appareil de cuisson électrique pour cuire des aliments selon au moins un mode de cuisson à air chaud.

### Etat de la technique

Il est connu de l'art antérieur d'utiliser un appareil de cuisson configuré pour réaliser une cuisson d'aliments, et comprenant :
- un boîtier comprenant un logement de réception ;
- un récipient de cuisson configuré pour occuper une position d'insertion dans laquelle le récipient de cuisson est disposé au moins en partie dans le logement de réception, et une position de retrait dans laquelle le récipient de cuisson est au moins partiellement retiré hors du logement de réception, le récipient de cuisson comprenant :
   o une cuve de cuisson configurée pour recevoir des aliments à cuire et pour être accessible pour un utilisateur lorsque le récipient de cuisson est dans la position de retrait, la cuve de cuisson et le boîtier étant configurés pour délimiter une chambre de cuisson lorsque le récipient de cuisson est dans la position d'insertion,
   o une façade avant configurée pour s'étendre au moins sensiblement en regard d'une partie avant de la cuve de cuisson,
   o une première paroi transparente montée sur la cuve de cuisson et configurée pour obturer au moins en partie un premier orifice traversant prévu sur la cuve de cuisson,
   o une deuxième paroi transparente montée sur la façade avant et configurée pour obturer au moins en partie un deuxième orifice traversant prévue sur la façade avant,
   ∘ un conduit de circulation d'air formé au moins en partie par la première paroi transparente et la deuxième paroi transparente et configuré pour permettre une circulation d'un flux d'air de refroidissement entre la première paroi transparente et la deuxième paroi transparente, et
un système de chauffage à air chaud prévu dans le boîtier et configuré pour chauffer et cuire les aliments présents à l'intérieur de la chambre de cuisson selon au moins un mode de cuisson à air chaud.

Ce type d'appareil de cuisson électrique est performant car il permet à un utilisateur de réaliser la cuisson d'aliments à cuire disposés dans la cuve de cuisson notamment selon un mode de cuisson à air chaud, la présence de la première paroi transparente et de la deuxième paroi transparente permettant à un utilisateur d'obtenir une indication visuelle de la cuisson des aliments présent dans le récipient de cuisson et pendant le fonctionnement de l'appareil de cuisson électrique quand bien même lorsque le récipient de cuisson est dans la position d'insertion.

Cependant, un inconvénient d'un tel appareil de cuisson électrique réside dans l'opacification de la première paroi transparente et de la deuxième paroi transparente lors de l'utilisation de l'appareil de cuisson électrique selon le mode de cuisson à air chaud. En effet, la proximité entre la chambre de cuisson et le conduit de circulation d'air peut conduire à la migration de l'air présent dans la chambre de cuisson, et chargé en humidité, en direction du conduit de circulation d'air, ce qui peut conduire à l'apparition de buées sur l'une, l'autre ou les deux parmi la première paroi transparente et la deuxième paroi transparente.

### Résumé de l'invention

Le problème technique à la base de l'invention consiste donc à fournir un appareil de cuisson électrique, conformé pour permettre une visibilité accrue des aliments présents dans la cuve de cuisson, qui soit de structure simple, compacte et économique, tout en permettant une utilisation sans risque pour un utilisateur.

A cet effet, la présente invention concerne un appareil de cuisson électrique configuré pour réaliser une cuisson d'aliments, et comprenant :
- un boîtier comprenant un logement de réception ;
- un récipient de cuisson configuré pour occuper une position d'insertion dans laquelle le récipient de cuisson est disposé au moins en partie dans le logement de réception, et une position de retrait dans laquelle le récipient de cuisson est au moins partiellement retiré hors du logement de réception, le récipient de cuisson comprenant :
   ∘ une cuve de cuisson configurée pour recevoir des aliments à cuire et pour être accessible pour un utilisateur lorsque le récipient de cuisson est dans la position de retrait, la cuve de cuisson et le boîtier étant configurés pour délimiter une chambre de cuisson lorsque le récipient de cuisson est dans la position d'insertion,
   ∘ une façade avant configurée pour s'étendre au moins sensiblement en regard d'une partie avant de la cuve de cuisson,
   ∘ une première paroi transparente montée sur la cuve de cuisson et configurée pour obturer au moins en partie un premier orifice traversant prévu sur la cuve de cuisson,
   ∘ une deuxième paroi transparente montée sur la façade avant et configurée pour obturer au moins en partie un deuxième orifice traversant prévue sur la façade avant, et
   ∘ un conduit de circulation d'air formé au moins en partie par la première paroi transparente et la deuxième paroi transparente et configuré pour permettre une circulation d'un flux d'air de refroidissement entre la première paroi transparente et la deuxième paroi transparente ;
- un système de chauffage à air chaud prévu dans le boîtier et configuré pour chauffer et cuire les aliments présents à l'intérieur de la chambre de cuisson selon au moins un mode de cuisson à air chaud ;
le récipient de cuisson comporte un élément d'étanchéité, tel qu'un joint d'étanchéité par exemple, configuré pour s'étendre au moins en partie entre la façade avant et la cuve de cuisson, l'élément d'étanchéité étant configuré pour limiter, et de préférence empêcher, une communication fluidique entre la chambre de cuisson et le conduit de circulation d'air lorsque le récipient de cuisson est dans la position d'insertion.

Une telle configuration de l'appareil de cuisson électrique permet d'empêcher une transmission de la chaleur depuis la chambre de cuisson vers le conduit de circulation d'air. En outre, l'air présent entre la première paroi transparente et la deuxième paroi transparente permet d'isoler thermiquement la deuxième paroi transparente de la première paroi transparente, et donc de maintenir une température basse de la deuxième paroi transparente afin de ne pas présenter de risque de brûlure pour un utilisateur.

L'appareil de cuisson électrique peut en outre présenter une ou plusieurs des caractéristiques suivantes, qui peuvent être prises seules ou en combinaison.

Selon un mode de réalisation de l'invention, le récipient de cuisson est amovible par rapport au boîtier.

Selon un mode de réalisation de l'invention, l'élément d'étanchéité est configuré pour s'étendre au moins en partie entre la première paroi transparente et le premier orifice traversant.

Selon un mode de réalisation de l'invention, l'élément d'étanchéité est fixé à la cuve de cuisson.

Cela permet de préserver l'élément d'étanchéité qui n'est ainsi pas désolidarisé du récipient de cuisson dans le cas où la façade serait amovible du récipient de cuisson.

Selon un mode de réalisation de l'invention, l'élément d'étanchéité est annulaire et est configuré pour s'étendre sur le pourtour de la première paroi transparente.

Selon un mode de réalisation de l'invention, le récipient de cuisson comporte au moins une poignée de préhension solidaire de la façade avant.

Selon un mode de réalisation de l'invention, la première paroi transparente et la deuxième paroi transparente sont prévues sur une face avant du récipient de cuisson, respectivement sur une face avant de la cuve de cuisson et sur une face avant de la façade avant.

Selon un mode de réalisation de l'invention, l'au moins une poignée de préhension s'étend au moins en partie en regard de la deuxième paroi transparente.

Selon un mode de réalisation de l'invention, la façade avant est configurée pour occuper une configuration d'utilisation dans laquelle la façade avant est fixée de manière amovible à la cuve de cuisson, et une configuration de nettoyage dans laquelle la façade avant est dissociée de la cuve de cuisson.

Selon un mode de réalisation de l'invention, la première paroi transparente s'étend au moins en partie en regard de la deuxième paroi transparente lorsque la façade avant est dans la configuration d'utilisation.

Selon un mode de réalisation de l'invention, le conduit de circulation d'air est formé au moins en partie par la première paroi transparente et la deuxième paroi transparente lorsque la façade avant est dans la configuration d'utilisation.

Selon un mode de réalisation de l'invention, l'appareil de cuisson électrique comprend un dispositif d'accouplement configuré pour permettre un accouplement réversible de la façade avant sur la cuve de cuisson.

Selon un mode de réalisation de l'invention, le dispositif d'accouplement comporte :
- un organe de verrouillage prévu sur la cuve de cuisson, et
- un élément de verrouillage prévu sur la façade avant,
l'élément de verrouillage étant mobile entre une configuration de verrouillage dans laquelle l'élément de verrouillage est configuré pour coopérer avec l'organe de verrouillage de manière à verrouiller la façade avant dans la configuration d'utilisation, et une configuration de libération dans laquelle l'élément de verrouillage est configuré pour libérer l'organe de verrouillage de manière à autoriser un déplacement de la façade avant dans la configuration de nettoyage.

Selon un mode de réalisation de l'invention, l'élément de verrouillage est monté pivotant autour d'un axe de pivotement.

Selon un mode de réalisation de l'invention, l'axe de pivotement est sensiblement horizontal lorsque l'appareil de cuisson électrique repose sur une surface horizontale et que le récipient de cuisson est dans la position d'insertion.

Selon un mode de réalisation de l'invention, l'appareil de cuisson électrique comporte un organe d'actionnement apte à être actionné par un utilisateur lorsque la façade avant est dans la configuration d'utilisation, l'organe d'actionnement étant configuré pour déplacer l'élément de verrouillage de la configuration de verrouillage à la configuration de libération lorsque l'organe d'actionnement est actionné par un utilisateur.

Selon un mode de réalisation de l'invention, l'organe d'actionnement est prévu sur la façade avant.

Selon un mode de réalisation de l'invention, l'organe d'actionnement est solidaire en pivotement avec l'élément de verrouillage.

Selon un mode de réalisation de l'invention, l'organe d'actionnement est configuré pour être accessible par un utilisateur lorsque la façade avant est dans la configuration d'utilisation et que le récipient de cuisson est dans la position d'insertion.

Selon un mode de réalisation de l'invention, la cuve de cuisson comporte un cadre de support configuré pour supporter la première paroi transparente, l'élément d'étanchéité étant configuré pour s'étendre au moins en partie entre le cadre de support et la première paroi transparente.

Selon un mode de réalisation de l'invention, l'organe de verrouillage est prévu sur le cadre de support.

Selon un mode de réalisation de l'invention, l'élément d'étanchéité comporte une portion de contact, telle qu'une lèvre d'étanchéité, configurée pour être en contact avec une surface intérieure de la façade avant. Une telle configuration de l'invention permet d'éviter une communication fluidique entre la chambre de cuisson et le conduit de circulation d'air lorsque la cuve de cuisson est dans la position d'insertion.

Selon un mode de réalisation de l'invention, l'élément d'étanchéité est un joint à lèvre.

Selon un mode de réalisation de l'invention, la portion de contact de l'élément d'étanchéité est configurée pour se déformer au contact de la surface intérieure de la façade avant. Une telle configuration de l'invention permet avantageusement une compensation du jeu pouvant résulter de l'assemblage entre la cuve de cuisson et la façade avant, et / ou de prévenir les défauts d'étanchéité résultants de la non-planéité de la surface intérieure par exemple.

Selon un mode de réalisation de l'invention, la portion de contact est configurée pour s'étendre sur le pourtour du deuxième orifice traversant.

Selon un mode de réalisation de l'invention, le système de chauffage à air chaud est prévu dans une partie supérieure du boîtier.

Selon un mode de réalisation de l'invention, le système de chauffage à air chaud comprend :
- un ventilateur disposé dans le boîtier, et par exemple dans une portion supérieure du boîtier, et configuré pour générer un flux d'air dans la chambre de cuisson ;
- une unité d'entraînement configurée pour entrainer en rotation le ventilateur autour d'un premier axe de rotation ; et
- un dispositif de chauffage disposé dans le boîtier, et par exemple dans la portion supérieure du boîtier, et configuré pour chauffer le flux d'air généré par le ventilateur.

Selon un mode de réalisation de l'invention, l'appareil de cuisson électrique comporte une unité d'extraction d'air disposée dans le boîtier et configurée pour générer le flux d'air de refroidissement dans le conduit de circulation d'air.

Selon un mode de réalisation de l'invention, l'unité d'extraction d'air est couplée en rotation à l'unité d'entraînement, l'appareil de cuisson électrique étant configuré de telle sorte que, lorsque la cuve de cuisson est dans la position d'insertion et que l'appareil de cuisson électrique est dans le mode de cuisson à air chaud, le flux d'air de refroidissement s'écoule dans le conduit de circulation d'air et entre la première paroi transparente et la deuxième paroi transparente.

Selon un mode de réalisation de l'invention, l'unité d'entraînement est configurée pour entrainer en rotation l'unité d'extraction d'air autour d'un deuxième axe de rotation. De façon avantageuse, le premier axe de rotation et le deuxième axe de rotation sont sensiblement parallèles et par exemple confondus.

Selon un mode de réalisation de l'invention, l'unité d'extraction d'air est configurée pour s'étendre au-dessus de l'unité d'entraînement lorsque l'appareil de cuisson électrique repose sur une surface horizontale. Une telle configuration de l'unité d'extraction d'air permet de souffler de l'air sur l'unité d'entraînement et ainsi créer un flux d'air de refroidissement descendant depuis le haut de l'appareil de cuisson électrique, le flux d'air de refroidissement étant configuré pour transiter par le conduit de circulation d'air avant d'être évacué hors de l'appareil de cuisson électrique.

Selon un autre mode de réalisation de l'invention, l'unité d'extraction d'air est configurée pour s'étendre en dessous de l'unité d'entrainement lorsque l'appareil de cuisson électrique repose sur une surface horizontale. Une telle configuration de l'unité d'extraction d'air permet de souffler de l'air sur l'unité d'entraînement et ainsi créer un flux d'air de refroidissement ascendant depuis le bas de l'appareil de cuisson électrique, le flux d'air étant configuré pour transiter par le conduit de circulation d'air avant d'être évacué hors de l'appareil de cuisson électrique par le haut.

Selon un mode de réalisation de l'invention, le conduit de circulation d'air comporte au moins un orifice d'admission d'air et au moins un orifice d'évacuation d'air qui sont prévus respectivement sur une partie inférieure et une partie supérieure de la façade avant, ou inversement.

Une telle configuration de l'invention permet de générer un flux d'air de refroidissement, ascendant depuis une extrémité inférieure de l'appareil de cuisson électrique et jusqu'à une extrémité supérieure de l'appareil de cuisson électrique lorsque que l'orifice d'admission d'air est prévu sur la partie inférieure de la façade avant et que l'orifice d'évacuation d'air est prévu sur la partie supérieure de la façade, le flux d'air de refroidissement circulant au travers du conduit de circulation d'air.

Inversement, lorsque que l'orifice d'admission d'air est prévu sur la partie supérieure de la façade avant et que l'orifice d'évacuation d'air est prévu sur la partie inférieure de la façade, le flux d'air de refroidissement généré est descendant depuis une extrémité supérieure de l'appareil de cuisson électrique et jusqu'à une extrémité inférieure de l'appareil de cuisson électrique, le flux d'air de refroidissement circulant au travers du conduit de circulation d'air.

Selon un mode de réalisation de l'invention, la première paroi transparente est réalisée à partir d'un solide non cristallin, tel que le verre par exemple.

Selon un mode de réalisation de l'invention, la deuxième paroi transparente est réalisée à partir d'un polymère thermoplastique, tel que le polycarbonate par exemple.

Selon un mode de réalisation de l'invention, l'appareil de cuisson électrique comporte une unité de commande configurée pour commander le fonctionnement de l'appareil de cuisson électrique selon au moins un mode de cuisson à air chaud.

Selon un mode de réalisation de l'invention, l'unité de commande est configurée pour activer le système de chauffage à air chaud lorsque l'appareil de cuisson électrique est dans le mode de cuisson à air chaud.

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
[Fig 1] est une vue en coupe d'un appareil de cuisson électrique selon un premier mode de réalisation de l'invention ;
[Fig 2] est une vue en perspective avant d'un récipient de cuisson appartenant à l'appareil de cuisson électrique de la figure 1, montrant une cuve de cuisson et une façade avant, appartenant au récipient de cuisson, dans une configuration d'utilisation ;
[Fig 3] est une vue en perspective, tronquée, du récipient de cuisson de la figure 2 ;
[Fig 4] est une vue partielle en perspective avant du récipient de cuisson ;
[Fig 5] est une vue partielle en perspective arrière du récipient de cuisson ;
[Fig 6] est une vue partielle en perspective, tronquée, du récipient de cuisson de la figure 5 ;
[Fig 7] est une vue en perspective arrière de la façade avant du récipient de cuisson de la figure 2 ;
[Fig 8] est une vue partielle en perspective avant de la cuve de cuisson de la figure 2 ;

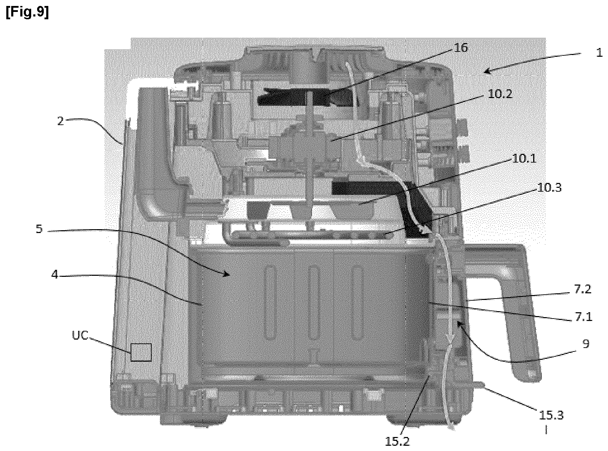

[Fig 9] est une vue en coupe d'un appareil de cuisson électrique selon un deuxième mode de réalisation de l'invention.

### Description détaillée

Dans le présent document, les termes « avant », « arrière », « supérieur » et « inférieur » sont définis par rapport à une utilisation normale de l'appareil de cuisson électrique durant laquelle le boîtier repose sur une surface horizontale

A défaut de stipulation contraire, le terme « sensiblement » signifie, dans le présent document, « exactement ou à 10% ou à 10° près ».

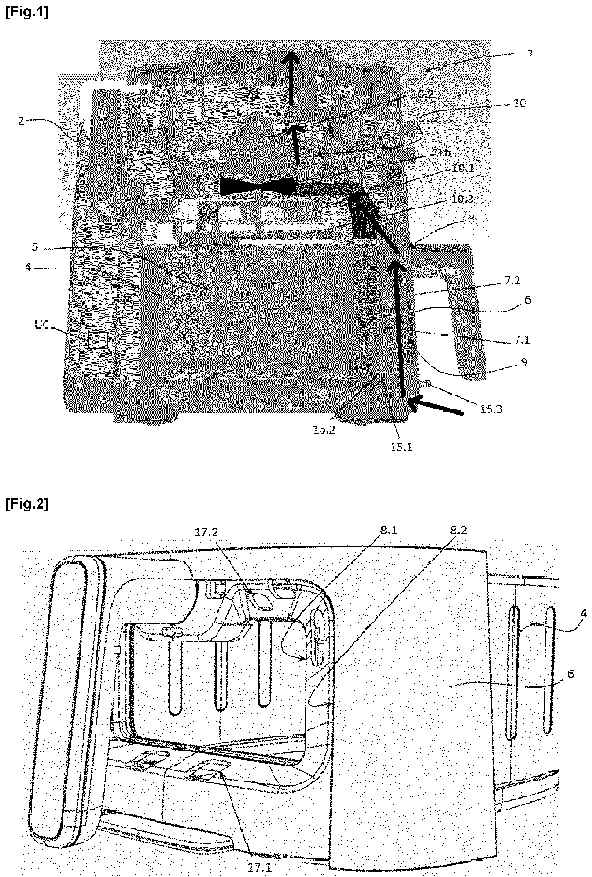

Les figures 1 à 8 représentent un appareil de cuisson électrique 1, tel qu'un appareil de cuisson à air chaud, selon un premier mode de réalisation de l'invention.

L'appareil de cuisson électrique 1 est configuré pour réaliser pour la cuisson d'aliments, tels que de la viande, du poisson, des légumes ou autres, et comporte une unité de commande UC configurée pour commander un fonctionnement de l'appareil de cuisson électrique 1 selon au moins un mode de cuisson à air chaud, et dont le fonctionnement sera détaillé ci-après.

L'appareil de cuisson électrique 1 comporte un boîtier 2 comprenant un logement de réception et un récipient de cuisson 3 configuré pour être disposé de manière amovible dans le logement de réception et pour recevoir les aliments à cuire.

Plus particulièrement, le récipient de cuisson 3 est configuré pour occuper une position d'insertion dans laquelle le récipient de cuisson 3 est disposé au moins en partie dans le logement de réception, et une position de retrait dans laquelle le récipient de cuisson 3 est au moins partiellement retiré hors du logement de réception.

Le récipient de cuisson 3 comporte une cuve de cuisson 4 configurée pour recevoir des aliments à cuire et pour être accessible pour un utilisateur lorsque le récipient de cuisson 3 est dans la position de retrait. La cuve de cuisson 4 et le boîtier 2 sont configurés pour délimiter une chambre de cuisson 5 lorsque le récipient de cuisson 3 est dans la position d'insertion.

Le récipient de cuisson 3 comporte de plus une façade avant 6 configurée pour s'étendre sensiblement en regard d'une partie avant de la cuve de cuisson 4. La façade avant 6 est avantageusement configurée pour occuper une configuration d'utilisation dans laquelle la façade avant 6 est fixée de manière amovible à la cuve de cuisson 4, et une configuration de nettoyage dans laquelle la façade avant 6 est dissociée de la cuve de cuisson 4.

Le récipient de cuisson 3 comporte en outre une première paroi transparente 7.1 montée sur une face avant de la cuve de cuisson 4 et une deuxième paroi transparente 7.2 montée sur une face avant de la façade avant 6, la première paroi transparente 7.1 et la deuxième paroi transparente 7.2 étant respectivement configurées pour obturer un premier orifice traversant 8.1 prévu sur la cuve de cuisson 4 et pour obturer un deuxième orifice traversant 8.2 prévue sur la façade avant 6.

De façon avantageuse, la première paroi transparente 7.1 s'étend au moins en partie en regard de la deuxième paroi transparente 7.2 lorsque la façade avant 6 est dans la configuration d'utilisation. Une telle configuration permet à un utilisateur de voir le contenu dans la cuve de cuisson 4 à travers la première paroi transparente 7.1 et la deuxième paroi transparente 7.2 lorsque le récipient de cuisson 3 est dans la position d'insertion, et ainsi de surveiller la cuisson des aliments présents dans la cuve de cuisson 4 par exemple.

La première paroi transparente 7.1 peut par exemple être réalisée à partir d'un solide non cristallin, tel que le verre par exemple, et la deuxième paroi transparente 7.2 peut par exemple être réalisée à partir d'un polymère thermoplastique, tel que le polycarbonate, ceci afin de favoriser la résistance, la nettoyabilité et la durabilité de l'appareil de cuisson électrique 1.

Le récipient de cuisson 3 comporte en outre un conduit de circulation d'air 9 formé en partie par la première paroi transparente 7.1 et la deuxième paroi transparente 7.2 lorsque la façade avant 6 est dans la configuration d'utilisation, le conduit de circulation d'air 9 étant configuré pour permettre une circulation d'un flux d'air de refroidissement entre la première paroi transparente 7.1 et la deuxième paroi transparente 7.2.

L'appareil de cuisson électrique 1 comporte également un système de chauffage à air chaud 10 prévu dans une partie supérieure du boîtier 2 et configuré pour chauffer et cuire les aliments présents à l'intérieur de la chambre de cuisson 5 selon au moins un mode de cuisson à air chaud. L'unité de commande UC est plus particulièrement configurée pour activer le système de chauffage à air chaud 10 lorsque l'appareil de cuisson électrique 1 est dans le mode de cuisson à air chaud. Le système de chauffage à air chaud 10 comporte avantageusement un ventilateur 10.1 disposé dans une portion supérieure du boîtier 2 et configuré pour générer un flux d'air dans la chambre de cuisson 5, une unité d'entraînement 10.2 configurée pour entrainer en rotation le ventilateur 10.1 autour d'un premier axe de rotation A1, et un dispositif de chauffage 10.3 disposé dans la portion supérieure du boîtier 2 et configuré pour chauffer le flux d'air généré par le ventilateur 10.1.

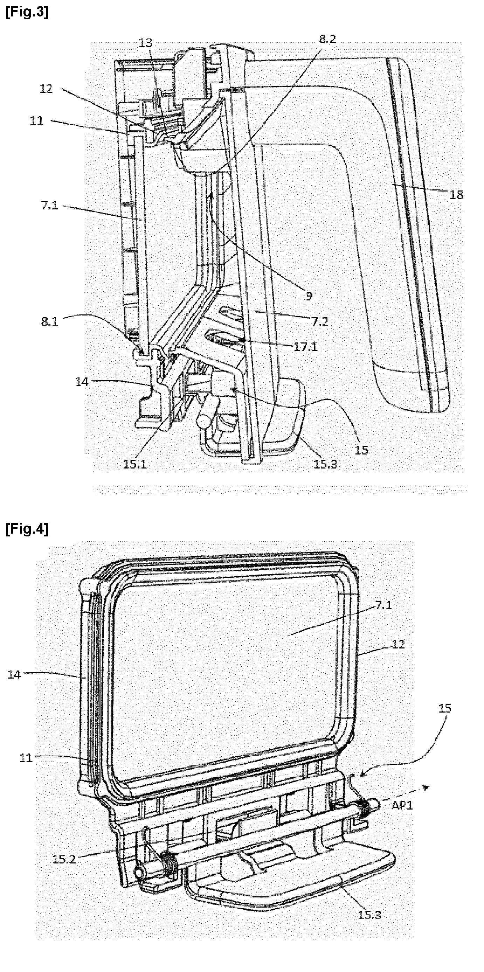

Comme représenté plus spécifiquement sur les figures 3 et 4, le récipient de cuisson 3 comporte un élément d'étanchéité 11, tel qu'un joint d'étanchéité par exemple, lequel est configuré pour s'étendre au moins en partie entre la façade avant 6 et la cuve de cuisson 4. L'élément d'étanchéité 11 est configuré pour limiter, et de préférence empêcher, une communication fluidique entre la chambre de cuisson 5 et le conduit de circulation d'air 9 lorsque le récipient de cuisson 3 est dans la position d'insertion. Une telle configuration de l'appareil de cuisson électrique 1 permet d'empêcher une transmission de la chaleur depuis la chambre de cuisson 5 vers le conduit de circulation d'air 9. En outre, l'air présent entre la première paroi transparente 7.1 et la deuxième paroi transparente 7.2 permet de maintenir une température basse de la deuxième paroi transparente 7.2 afin de ne pas présenter de risque de brûlure pour un utilisateur.

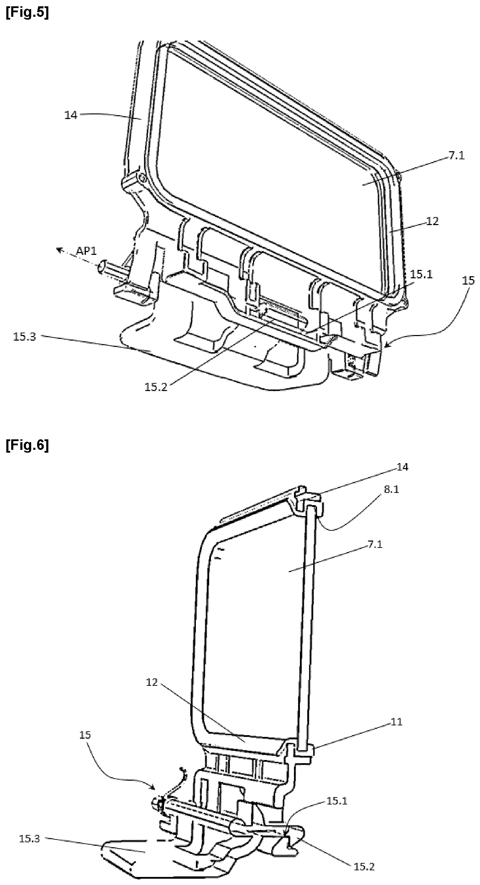

Selon le premier mode de réalisation représenté sur les figures, l'élément d'étanchéité 11 est fixé à la cuve de cuisson 4 et est configuré pour s'étendre au moins en partie entre la première paroi transparente 7.1 et le premier orifice traversant 8.1 (figure 6). Avantageusement, l'élément d'étanchéité 11 est annulaire et est configuré pour s'étendre sur le pourtour de la première paroi transparente 7.1.

Selon le premier mode de réalisation de l'invention représenté sur les figures, l'élément d'étanchéité 11 est un joint à lèvre et comporte une portion de contact 12, telle qu'une lèvre d'étanchéité. La portion de contact 12 est avantageusement configurée pour s'étendre sur le pourtour du deuxième orifice traversant 8.2 et pour être en contact avec une surface intérieure 13 de la façade avant 6 lorsque la façade avant 6 est dans la configuration d'utilisation. Une telle configuration de l'invention permet d'éviter une communication fluidique entre la chambre de cuisson 5 et le conduit de circulation d'air 9 lorsque la cuve de cuisson 4 est dans la position d'insertion.

La portion de contact 12 de l'élément d'étanchéité 11 est configurée pour se déformer au contact de la surface intérieure 13 de la façade avant 6. Une telle configuration de l'invention permet avantageusement une compensation du jeu pouvant résulter de l'assemblage entre la cuve de cuisson 4 et la façade avant 6, et/ou de prévenir les défauts d'étanchéité résultants de la non-planéité de la surface intérieure 13 par exemple.

Comme représenté plus spécifiquement sur les figures 3 et 4, la cuve de cuisson 4 comporte un corps de cuve et un cadre de support 14 qui est fixé au corps de cuve et qui est configuré pour supporter la première paroi transparente 7.1, l'élément d'étanchéité 11 étant au moins en partie interposé entre le cadre de support 14 et la première paroi transparente 7.1.

Selon le premier mode de réalisation de l'invention, l'appareil de cuisson électrique 1 comprend un dispositif d'accouplement 15 configuré pour permettre un accouplement réversible de la façade avant 6 sur la cuve de cuisson 4. Le dispositif d'accouplement 15 comporte un organe de verrouillage 15.1, tel qu'un orifice de verrouillage, prévu sur la cuve de cuisson 4, et un élément de verrouillage 15.2, tel qu'un doigt de verrouillage, prévu sur la façade avant 6. De façon avantageuse, l'élément de verrouillage 15.2 est mobile entre une configuration de verrouillage dans laquelle l'élément de verrouillage 15.2 est configuré pour coopérer avec l'organe de verrouillage 15.1 de manière à verrouiller la façade avant 6 sur la cuve de cuisson 4 et donc dans la configuration d'utilisation, et une configuration de libération dans laquelle l'élément de verrouillage 15.2 est configuré pour libérer l'organe de verrouillage 15.1 de manière à autoriser un déplacement de la façade avant 6 par rapport à la cuve de cuisson 4. De façon avantageuse, l'élément de verrouillage 15.2 est monté pivotant autour d'un axe de pivotement AP1 qui est sensiblement horizontal lorsque l'appareil de cuisson électrique 1 repose sur une surface horizontale et que le récipient de cuisson 3 est dans la position d'insertion.

En outre, l'appareil de cuisson électrique 1 comporte un organe d'actionnement 15.3 monté sur la façade avant 6 et solidaire en pivotement avec l'élément de verrouillage 15.2. L'organe d'actionnement 15.3 est configuré pour être accessible par un utilisateur lorsque la façade avant 6 est dans la configuration d'utilisation et que le récipient de cuisson 3 est dans la position d'insertion, l'organe d'actionnement 15.3 étant apte à être actionné par un utilisateur et étant configuré pour commander un déplacement de l'élément de verrouillage 15.2 au moins entre la configuration de verrouillage et la configuration de libération. De façon avantageuse, l'organe d'actionnement 15.3 est configuré pour être au moins en partie en saillie par rapport à une surface extérieure de la façade avant 6 lorsque la façade avant 6 est dans la configuration d'utilisation.

Selon le premier mode de réalisation de l'invention, et comme représenté plus spécifiquement sur les figures 1 à 3, l'appareil de cuisson électrique 1 comporte une unité d'extraction d'air 16 disposée dans le boîtier 2 et configurée pour générer le flux d'air de refroidissement dans le conduit de circulation d'air 9. L'unité d'extraction d'air 16 est avantageusement couplée en rotation à l'unité d'entraînement 10.2, l'appareil de cuisson électrique 1 étant configuré de telle sorte que, lorsque la cuve de cuisson 4 est dans la position d'insertion et que l'appareil de cuisson électrique 1 est dans le mode de cuisson à air chaud, le flux d'air de refroidissement s'écoule dans le conduit de circulation d'air 9 et entre la première paroi transparente 7.1 et la deuxième paroi transparente 7.2.

L'unité d'entraînement 10.2 est plus particulièrement configurée pour entrainer en rotation l'unité d'extraction d'air 16 autour d'un deuxième axe de rotation A2. De façon avantageuse, le premier axe de rotation A1 et le deuxième axe de rotation A2 sont sensiblement parallèles et par exemple confondus.

Selon le premier mode de réalisation de l'invention, l'unité d'extraction d'air 16 est configurée pour s'étendre en dessous de l'unité d'entraînement 10.2 lorsque l'appareil de cuisson électrique 1 repose sur une surface horizontale. Une telle configuration de l'unité d'extraction d'air 16 permet de souffler de l'air sur l'unité d'entraînement 10.2 et ainsi créer un flux d'air de refroidissement ascendant depuis le bas de l'appareil de cuisson électrique 1, le flux d'air étant configuré pour transiter par le conduit de circulation d'air 9 avant d'être évacué hors de l'appareil de cuisson électrique 1 par le haut.

Le conduit de circulation d'air 9 comporte au moins un orifice d'admission d'air 17.1 et au moins un orifice d'évacuation d'air 17.2 (voir figures 2 et 3) qui sont prévus respectivement sur une partie inférieure et une partie supérieure de la façade avant 6. Une telle configuration de l'invention permet de générer un flux d'air de refroidissement, ascendant depuis une extrémité inférieure de l'appareil de cuisson électrique 1 et jusqu'à une extrémité supérieure de l'appareil de cuisson électrique 1 lorsque que l'orifice d'admission d'air 17.1 est prévu sur la partie inférieure de la façade avant 6 et que l'orifice d'évacuation d'air 17.2 est prévu sur la partie supérieure de la façade, le flux d'air de refroidissement circulant au travers du conduit de circulation d'air 9.

En outre, le récipient de cuisson 3 comporte au moins une poignée de préhension 18 solidaire de la façade avant 6 et configurée pour s'étendre au moins en partie en regard de la deuxième paroi transparente 7.2.

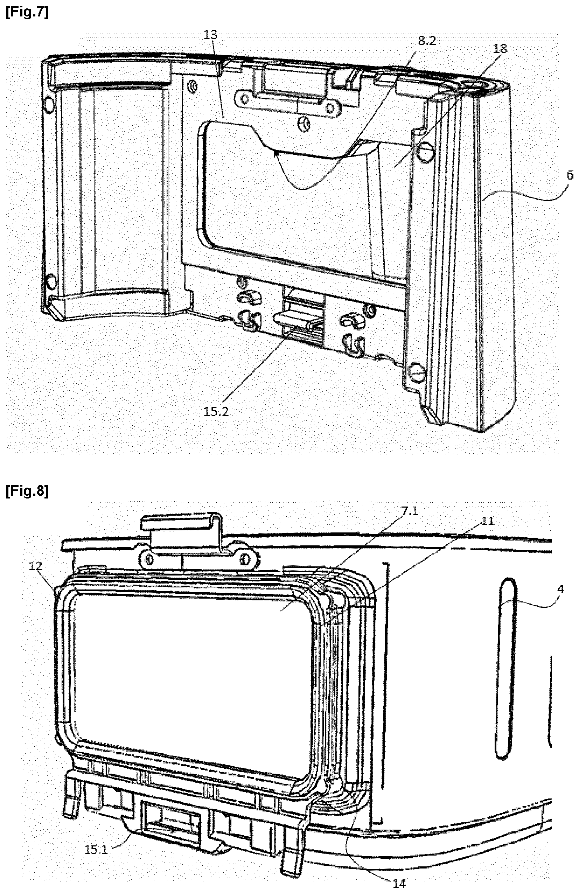

La figure 8 représente un appareil de cuisson électrique 1 selon un deuxième mode de réalisation de l'invention qui diffère du premier mode de réalisation essentiellement en ce que l'unité d'extraction d'air 16 est configurée pour s'étendre au-dessus de l'unité d'entraînement 10.2 lorsque l'appareil de cuisson électrique 1 repose sur une surface horizontale. Une telle configuration de l'unité d'extraction d'air 16 permet de souffler de l'air sur l'unité d'entraînement 10.2 et ainsi créer un flux d'air de refroidissement descendant depuis le haut de l'appareil de cuisson électrique 1. Le flux d'air de refroidissement est ainsi configuré pour transiter par le conduit de circulation d'air 9 avant d'être évacué hors de l'appareil de cuisson électrique 1.

Selon le deuxième mode de réalisation de l'invention, l'au moins un orifice d'admission d'air 17.1 et l'au moins un orifice d'évacuation d'air 17.2 sont prévus respectivement sur une partie supérieure et une partie inférieure de la façade avant 6. Contrairement au premier mode de réalisation de l'invention, lorsque l'orifice d'admission d'air 17.1 est prévu sur la partie supérieure de la façade avant 6 et que l'orifice d'évacuation d'air 17.2 est prévu sur la partie inférieure de la façade, le flux d'air de refroidissement généré est descendant depuis l'extrémité supérieure de l'appareil de cuisson électrique 1 et jusqu'à l'extrémité inférieure de l'appareil de cuisson électrique 1, le flux d'air de refroidissement circulant au travers du conduit de circulation d'air 9.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Appareil de cuisson électrique (1) configuré pour réaliser une cuisson d'aliments, et comprenant :
- un boîtier (2) comprenant un logement de réception ;
- un récipient de cuisson (3) configuré pour occuper une position d'insertion dans laquelle le récipient de cuisson (3) est disposé au moins en partie dans le logement de réception, et une position de retrait dans laquelle le récipient de cuisson (3) est au moins partiellement retiré hors du logement de réception, le récipient de cuisson (3) comprenant :
o une cuve de cuisson (4) configurée pour recevoir des aliments à cuire et pour être accessible pour un utilisateur lorsque le récipient de cuisson (3) est dans la position de retrait, la cuve de cuisson (4) et le boîtier (2) étant configurés pour délimiter une chambre de cuisson (5) lorsque le récipient de cuisson (3) est dans la position d'insertion,
∘ une façade avant (6) configurée pour s'étendre au moins sensiblement en regard d'une partie avant de la cuve de cuisson (4),
∘ une première paroi transparente (7.1) montée sur la cuve de cuisson (4) et configurée pour obturer au moins en partie un premier orifice traversant (8.1) prévu sur la cuve de cuisson (4),
∘ une deuxième paroi transparente (7.2) montée sur la façade avant (6) et configurée pour obturer au moins en partie un deuxième orifice traversant (8.2) prévue sur la façade avant (6), et
∘ un conduit de circulation d'air (9) formé au moins en partie par la première paroi transparente (7.1) et la deuxième paroi transparente (7.2) et configuré pour permettre une circulation d'un flux d'air de refroidissement entre la première paroi transparente (7.1) et la deuxième paroi transparente (7.2) ;
- un système de chauffage à air chaud (10) prévu dans le boîtier (2) et configuré pour chauffer et cuire les aliments présents à l'intérieur de la chambre de cuisson (5) selon au moins un mode de cuisson à air chaud ;
**caractérisé en ce que** le récipient de cuisson (3) comporte un élément d'étanchéité (11) configuré pour s'étendre au moins en partie entre la façade avant (6) et la cuve de cuisson (4), l'élément d'étanchéité (11) étant configuré pour limiter, et de préférence empêcher, une communication fluidique entre la chambre de cuisson (5) et le conduit de circulation d'air (9) lorsque le récipient de cuisson (3) est dans la position d'insertion.

2. Appareil de cuisson électrique (1) selon la revendication 1, dans lequel la façade avant (6) est configurée pour occuper une configuration d'utilisation dans laquelle la façade avant (6) est fixée de manière amovible à la cuve de cuisson (4), et une configuration de nettoyage dans laquelle la façade avant (6) est dissociée de la cuve de cuisson (4).

3. Appareil de cuisson électrique (1) selon la revendication 2, dans lequel la première paroi transparente (7.1) s'étend au moins en partie en regard de la deuxième paroi transparente (7.2) lorsque la façade avant (6) est dans la configuration d'utilisation.

4. Appareil de cuisson électrique (1) selon la revendication 2 ou la revendication 3, lequel comprend un dispositif d'accouplement (15) configuré pour permettre un accouplement réversible de la façade avant (6) sur la cuve de cuisson (4).

5. Appareil de cuisson électrique (1) selon la revendication 4, dans lequel le dispositif d'accouplement (15) comporte :
- un organe de verrouillage (15.1) prévu sur la cuve de cuisson (4), et
- un élément de verrouillage (15.2) prévu sur la façade avant (6),
l'élément de verrouillage (15.2) étant mobile entre une configuration de verrouillage dans laquelle l'élément de verrouillage (15.2) est configuré pour coopérer avec l'élément de verrouillage (15.1) de manière à verrouiller la façade avant (6) dans la configuration d'utilisation, et une configuration de libération dans laquelle l'élément de verrouillage (15.2) est configuré pour libérer l'organe de verrouillage (15.1) de manière à autoriser un déplacement de la façade avant (6) dans la configuration de nettoyage.

6. Appareil de cuisson selon la revendication précédente, lequel comporte un organe d'actionnement (15.3) apte à être actionné par un utilisateur lorsque la façade avant (6) est dans la configuration d'utilisation, l'organe d'actionnement (15.3) étant configuré pour déplacer l'élément de verrouillage (15.2) de la configuration de verrouillage à la configuration de libération lorsque l'organe d'actionnement (15.3) est actionné par un utilisateur.

7. Appareil de cuisson selon l'une quelconque des revendications précédentes, dans lequel la cuve de cuisson (4) comporte un cadre de support (14) configuré pour supporter la première paroi transparente (7.1), l'élément d'étanchéité (11) étant configuré pour s'étendre au moins en partie entre le cadre de support (14) et la première paroi transparente (7.1).

8. Appareil de cuisson électrique (1) selon l'une quelconque des revendications 1 à 7, dans lequel l'élément d'étanchéité (11) comporte une portion de contact (12) configurée pour être en contact avec une surface intérieure (13) de la façade avant (6).

9. Appareil de cuisson électrique (1) selon la revendication précédente, dans lequel la portion de contact (12) de l'élément d'étanchéité (11) est configurée pour se déformer au contact de la surface intérieure (13) de la façade avant (6).

10. Appareil de cuisson électrique (1) selon la revendication 8 ou 9, dans lequel la portion de contact (12) est configurée pour s'étendre sur le pourtour du deuxième orifice traversant (8.2).

11. Appareil de cuisson électrique (1) selon l'une quelconque des revendications précédentes, dans lequel le système de chauffage à air chaud (10) comprend :
- un ventilateur (10.1) disposé dans le boîtier (2) et configuré pour générer un flux d'air dans la chambre de cuisson (5) ;
- une unité d'entraînement (10.2) configurée pour entrainer en rotation le ventilateur (10.1) autour d'un premier axe de rotation ; et
- un dispositif de chauffage (10.3) disposé dans le boîtier (2) et configuré pour chauffer le flux d'air généré par le ventilateur (10.1).

12. Appareil de cuisson électrique (1) selon l'une quelconque des revendications précédentes, lequel comporte une unité d'extraction d'air (16) disposée dans le boîtier (2) et configurée pour générer le flux d'air de refroidissement dans le conduit de circulation d'air (9).

13. Appareil de cuisson électrique (1) selon les revendications 11 et 12, dans lequel l'unité d'extraction d'air (16) est couplée en rotation à l'unité d'entraînement (10.2), l'appareil de cuisson électrique (1) étant configuré de telle sorte que, lorsque la cuve de cuisson (4) est dans la position d'insertion et que l'appareil de cuisson électrique (1) est dans le mode de cuisson à air chaud, le flux d'air de refroidissement s'écoule dans le conduit de circulation d'air (9) et entre la première paroi transparente (7.1) et la deuxième paroi transparente (7.2).

14. Appareil de cuisson électrique (1) selon l'une quelconque des revendications précédentes, dans lequel le conduit de circulation d'air (9) comporte au moins un orifice d'admission d'air (17.1) et au moins un orifice d'évacuation d'air (17.2) qui sont prévus respectivement sur une partie inférieure et une partie supérieure de la façade avant (6), ou inversement.

15. Appareil de cuisson électrique (1) selon l'une quelconque des revendications précédentes, dans lequel la première paroi transparente (7.1) est réalisée à partir d'un solide non cristallin.

16. Appareil de cuisson électrique (1) selon l'une quelconque des revendications précédentes, dans lequel la deuxième paroi transparente (7.2) est réalisée à partir d'un polymère thermoplastique.
